# EUROPÄISCHE PATENTSCHRIFT

(11) **EP 1 375 808 B1**
(45) Veröffentlichungstag und Bekanntmachung des Hinweises auf die Patenterteilung: **06.10.2010**
(21) Anmeldenummer: 03014710.2
(22) Anmeldetag: 27.06.2003
(51) Int. Cl.: E05F 15/00, E05F 15/20, G01V 8/12

(54) **Sensorvorrichtung für eine automatische Drehtüranlage**
Sensor device for an automatic swing door arrangement
Dispositif de détection pour construction de porte pivotante

(30) Priorität: 28.06.2002 DE 10228930
(43) Veröffentlichungstag der Anmeldung: 02.01.2004
(73) Patentinhaber: GEZE GmbH, 71229 Leonberg (DE)
(72) Erfinder: Hucker, Matthias, Dr., 76359 Marxzell (DE); Beck, Jürgen, 75242 Neuhausen (DE)

(56) Entgegenhaltungen:
- WO-A-00/08286
- DE-C1- 4 415 401

## Beschreibung

Die Erfindung betrifft eine Sensorvorrichtung nach dem Oberbegriff des Patentanspruchs 1.

Die gattungsgemäße WO 00 / 08 286 A1 beschreibt eine automatische Drehtüranlage mit einem Drehtürflügel. Eine eine Steuerungseinrichtung aufweisende Antriebseinrichtung dient zum motorischen Öffnen und/oder Schließen des Drehtürflügels. Eine Sensorvorrichtung mit einem Sensor ist zur Erkennung von Personen oder Gegenständen im Bewegungsbereich des Drehtürflügels vorhanden, wobei der Sensor eine Sendereinrichtung zur Aussendung von Lichtstrahlen, eine Detektoreinrichtung zum detektieren von Lichtstrahlen sowie eine Signalübertragungseinrichtung zur Übertragung der Sensorsignale zur Steuerungseinrichtung umfasst. Der Sensor ist mit mindestens einem Senderelement und mindestens einem Detektorelement im Bereich der vertikalen Nebenschließkante des Drehtürflügels angeordnet, wobei ein Lichtstrahl des Senderelements nahe bei und zumindest annähernd parallel zu der vertikalen Nebenschließkante des Drehtürflügels verläuft. Hierdurch ist sichergestellt, dass ein sich in der Nähe der vertikalen Nebenschließkante des Drehtürflügels befindliches Objekt schon bei Annäherung an die Nebenschließkante von der Sensorvorrichtung erfasst wird, so dass ein Stopp bzw. Reversieren des Drehtürflügels erfolgt, bevor das Objekt in den sich verengenden Spalt der Nebenschließkante gerät. Zwar deckt dieser ortsfest angeordnete Sensor mit seinem breit gefächerten Erfassungsfeld neben der Nebenschließkante auch den bodenseitigen Bewegungsbereich des Drehflügels ab, jedoch werden Gegenstände, welche sich außerhalb dieses kegelsegmentartigen Erfassungsfeld, aber innerhalb der Bewegungsbereichs des Drehflügels befinden, nicht erfasst.

Aus der DE 44 15 401 C1 ist eine Überwachungsvorrichtung für den Drehtürflügel einer motorisch angetriebenen Drehtüranlage bekannt. Der Sensor der Überwachungsvorrichtung ist als Sensorleiste zur Erkennung von Personen oder Gegenständen im Bewegungsbereich des Drehtürflügels ausgebildet, wobei die Sensorleiste eine Sendereinrichtung zur Aussendung von Lichtstrahlen, eine Detektoreinrichtung zum detektieren von Lichtstrahlen sowie eine Signalübertragungseinrichtung zur Übertragung der Sensorsignale zu einer Steuerungseinrichtung umfasst. Die gezeigte Überwachungsvorrichtung gewährleistet zwar eine Absicherung der Hauptschließkante und eines großen Teils des Bewegungsbereichs des Drehtürflügels, lässt die vertikale Nebenschließkante des Drehtürflügels jedoch unabgesichert. Ein Objekt kann also in dem sich beim Schließen des Drehtürflügels verengenden Spalt der vertikalen Nebenschließkante eingeklemmt werden, ohne dass die Überwachungsvorrichtung diese drohende oder bereits erfolgte Einklemmung erkennt und einen Stopp bzw. ein Reversieren der Bewegung des Drehtürflügels auslöst.

Der Erfindung liegt die Aufgabe zugrunde, eine Sensorvorrichtung zu schaffen, die eine sichere und zuverlässige Überwachung des Drehtürflügels an der Nebenschließkante gewährleistet.

Die Aufgabe wird durch die Merkmale des Patentanspruchs 1 gelöst.

Es ist eine Sensorleiste am Drehtürflügel angeordnet, wobei die Wellenlänge des Senderelements des Sensors von der Wellenlänge des Senderelements bzw. der Senderelemente der Sensorleiste abweicht, um eine gegenseitige Beeinflussung des Sensors und der Sensorleiste zu vermeiden.

Der Sensor kann am Drehtürflügel angeordnet sein, zusätzlich zu der Sensorleiste. In bevorzugten Ausführungsformen ist der Sensor bandgegenseitig im Bereich der oberen horizontalen Kante des Drehtürflügels angeordnet. Alternativ ist jedoch auch eine Anordnung des Sensors an anderer Stelle des Drehtürflügels denkbar, beispielsweise direkt im Falz der Nebenschließkante. Optisch besonders ansprechende Ausführungen der Sensorvorrichtung ergeben sich, wenn der Sensor in der Sensorleiste integriert angeordnet ist.

Der Sensor kann jedoch alternativ auch separat von der Sensorleiste ausgebildet sein. Dann ist es vorteilhaft, wenn der Sensor und die Sensorleiste modular ausgebildet sind. Die Sensorleiste kann eine Anschlusseinrichtung zum Anschluss des Sensors aufweisen, um einen leicht herstellbaren elektrischen und mechanischen Anschluss der Module untereinander zu gewährleisten. Um die Module optisch einheitlich erscheinen zu lassen, können der Sensor und die Sensorleiste unter einer gemeinsamen Abdeckblende angeordnet sein.

Bei alternativen Ausführungsformen der Sensorvorrichtung kann der Sensor ortsfest angeordnet sein, z.B. wenn die Einbauverhältnisse dessen flügelfeste Anordnung nicht zulassen, oder bei Nachrüstung bestehender automatischer Drehtüranlagen. Wesentlich ist auch bei der ortsfesten Anordnung, dass ein Lichtstrahl des Senderelements des Sensors nahe bei und zumindest nahezu parallel zu der vertikalen Nebenschließkante des Drehtürflügels verläuft.

In einer vorteilhaften Ausgestaltung der Erfindung ist eine selbstlernende Funktion der Sensorvorrichtung vorgesehen. Nach der Inbetriebnahme der Drehtüranlage führt der Drehtürflügel eine vollständige Öffnungs- und Schließbewegung unter Erfassung der Signale der Sensorleisten und Speicherung dieser Signale in einer Speichereinrichtung durch. Wird nun z.B. eine Wand, an die sich der Drehtürflügel bei seiner Öffnungsbewegung annähert, von einem der kegelförmigen Lichtstrahlen der Senderelemente erfasst und das von der Wand reflektierte Licht von einem der Detektorelemente detektiert, so wird in der Speichereinrichtung der öffnungswinkelabhängig variierende Lichtintensitätsverlauf an den einzelnen Detektorelementen als Referenzwertverlauf für den hindernisfreien Betrieb der Drehtüranlage gespeichert. Eine Vergleichereinrichtung vergleicht diese gespeicherten Werte mit den aktuellen Ausgangssignalen der Detektorelemente. In Normalbetrieb werden also die Senderelemente, die bei der Öffnungsbewegung des Drehtürflügels die Wand erfassen, sukzessive "ausgeblendet", d.h. es findet kein Stopp der Öffnungsbewegung des Drehtürflügels statt, obwohl ein sich im Erfassungsbereich der Senderelemente befindlicher Gegenstand (nämlich in diesem Fall die Wand) erkannt wurde.

Je mehr Sender- und Detektorelemente die Sensorleiste enthält, desto feiner kann diese sukzessive "Wandausblendung" erfolgen, da immer nur das einzelne Senderelement "ausgeblendet" wird, welches mit seinem Lichtstrahl gerade den unbeweglichen Gegenstand, z.B. die Wand, erfasst hat, wohingegen die übrigen Senderelemente noch wirksam sind.

Das Vorhandensein unbeweglicher Gegenstände im Erfassungsbereich einzelner Senderelemente und nicht im Schwenkbereich des Drehtürflügels kann auch gezielt zur regelmäßigen Überprüfung der Funktion der Sensorvorrichtung genutzt werden. Wie vorangehend beschrieben, ist in der Steuerungseinrichtung ein öffnungswinkelabhängiger Intensitätsverlauf des von den einzelnen Detektorelemente empfangenen Lichts gespeichert. Werden diese öffnungswinkelabhängig variierenden Referenzwerte deutlich unterschritten, kann dies als Anzeichen einer Störung in der Sensorleiste, z.B. Ausfall einzelner Senderelemente oder Detektorelemente, gewertet werden.

Die Übertragung der Signale zwischen dem Sensor und der Steuerungseinrichtung kann bidirektional erfolgen, insbesondere dann, wenn die vorangehenden Wandausblendungs- und/oder Testfunktionen implementiert sind.

Im Nachfolgenden werden Ausführungsbeispiele anhand der Figuren näher erläutert. Dabei zeigen:
- **Figur 1**: eine Frontansicht einer automatischen Drehtüranlage mit einer Sen- sorvorrichtung (Bandseite);
- **Figur 2**: eine Schnittdarstellung der automatischen Drehtüranlage aus Figur 1 entlang der Linie I - I;
- **Figur 3**: eine Frontansicht der automatischen Drehtüranlage aus Figur 1 (Bandgegenseite);
- **Figur 4**: eine Schnittdarstellung der automatischen Drehtüranlage aus Figur 1 entlang der Linie II - 11;
- **Figur 5**: eine Schnittdarstellung der automatischen Drehtüranlage aus Figur 1 entlang der Linie III - III;
- **Figur 6**: eine Schnittdarstellung der automatischen Drehtüranlage aus Figur 1 entlang der Linie IV - IV;
- **Figur 7**: eine Schnittdarstellung der Sensorleiste der automatischen Drehtüranlage aus Figur 2 entlang der Linie V - V;
- **Figur 8**: eine Frontansicht der automatischen Drehtüranlage aus Figur 1 mit Darstellung des Verlaufs der Lichtstrahlen (Bandseite);
- **Figur 9**: eine Figur 2 entsprechende Darstellung mit Darstellung des Verlaufs der Lichtstrahlen;
- **Figur 10**: eine Frontansicht der automatischen Drehtüranlage aus Figur 1 mit Darstellung des Verlaufs der Lichtstrahlen (Bandgegenseite);
- **Figur 11**: eine Schnittdarstellung eines gegenüber der automatischen Drehtüranlage aus Figur 1 abgewandelten Ausführungsbeispiels entlang der Linie III-III;
- **Figur 12**: eine Frontansicht des abgewandelten Ausführungsbeispiels der automatischen Drehtüranlage aus Figur 11 mit Darstellung des Verlaufs der Lichtstrahlen (Bandgegenseite).

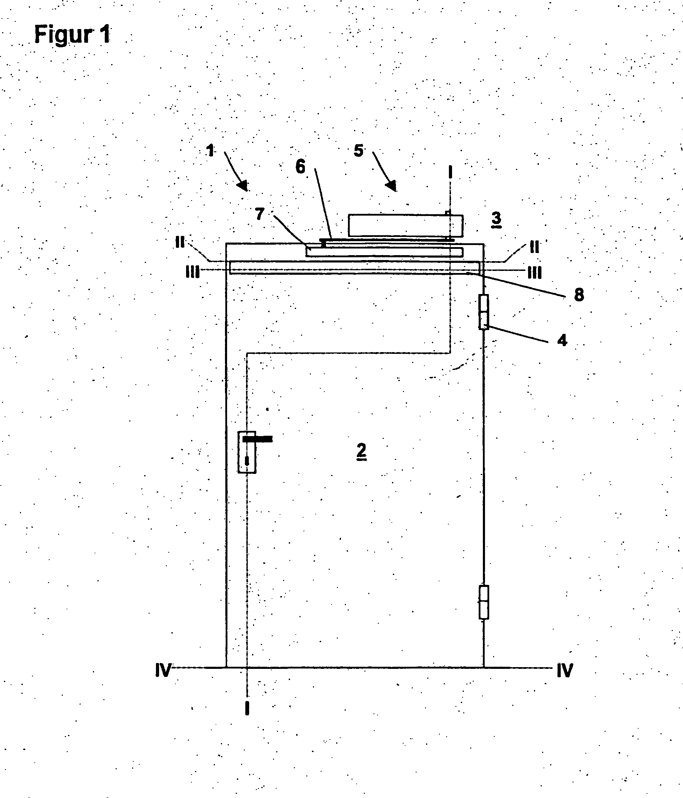

**Figur 1** zeigt eine automatische Drehtüranlage 1 mit einem an Bändern 4 drehbar gelagerten Drehtürflügel 2. Oberhalb des Drehtürflügels 2 ist am ortsfesten Türrahmen 3 eine Antriebseinrichtung 5 angeordnet. Diese ist als elektrischer oder elektrohydraulischer Drehtürantrieb ausgebildet und steht über ein als Gleitarm ausgebildetes, mittels eines Gleiters in einer Gleitschiene 7 geführten kraftübertragenden Gestänges 6 in Verbindung mit dem Drehtürflügel 2. Eine Betätigung der Antriebseinrichtung 5 - ausgelöst durch das Signal eines hier nicht dargestellten Bewegungsmelders oder eines anderen Betätigungselements, z.B. eines Tasters - bewirkt somit eine Bewegung des Drehtürflügels 5 in Öffnungsrichtung. Die Schließung erfolgt durch den Antriebsmotor oder durch die Schließerfeder des Drehtürantriebs.

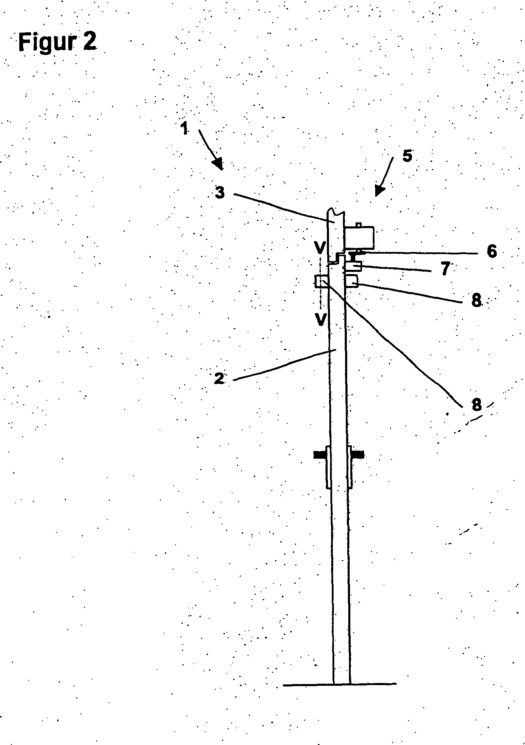

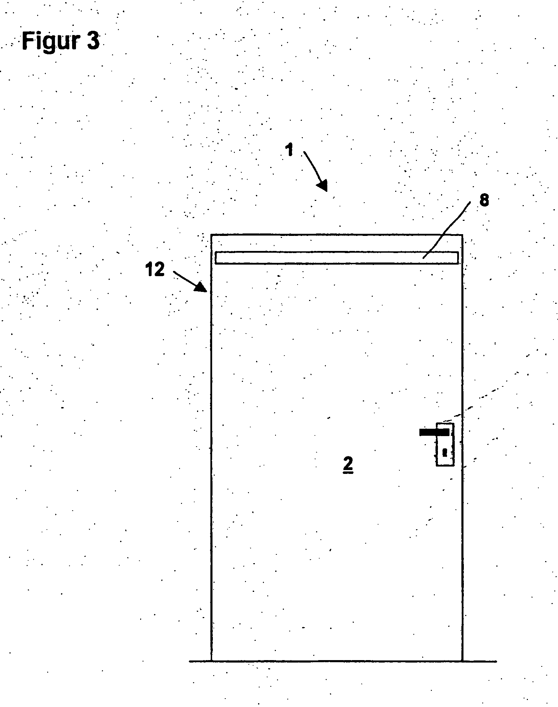

An der oberen horizontalen Kante des Drehtürflügels ist eine Sensorleiste 8 angeordnet. Wie aus **Figur 2** ersichtlich, ist jeweils eine Sensorleiste 8 auf der Bandseite und auf der Bandgegenseite des Drehtürflügels 2 angeordnet. Die bandseitige, in **Figur 1** dargestellte Sensorleiste 8 bewirkt ein Anhalten oder Reversieren der Bewegung des sich öffnenden Drehtürflügels, wenn eine Person oder ein sonstiger Gegenstand während des Öffnens in den Bewegungsbereich des Drehtürflügels gerät. Die bandgegenseitige, in **Figur 3** dargestellte Sensorleiste 8 bewirkt ein Anhalten oder Reversieren der Bewegung des sich schließenden Drehtürflügels, wenn eine Person oder ein sonstiger Gegenstand während des Schließens in den Bewegungsbereich des Drehtürflügels gerät.

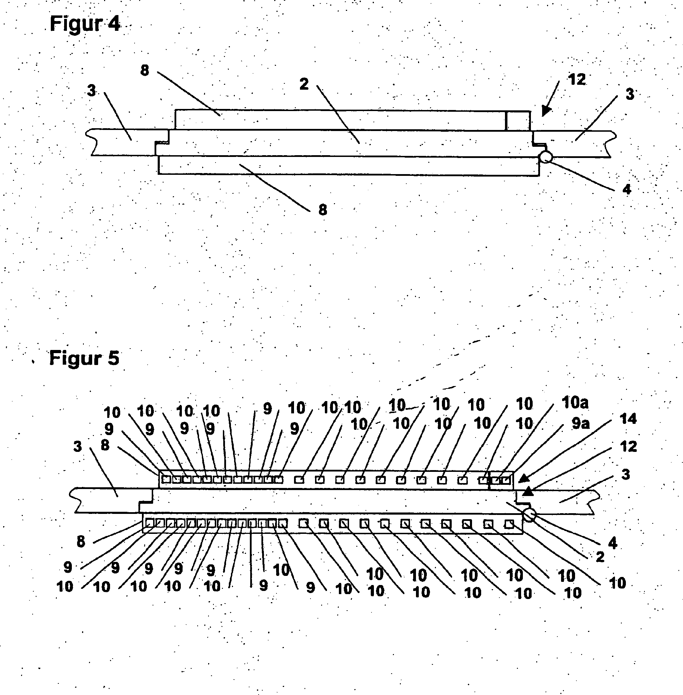

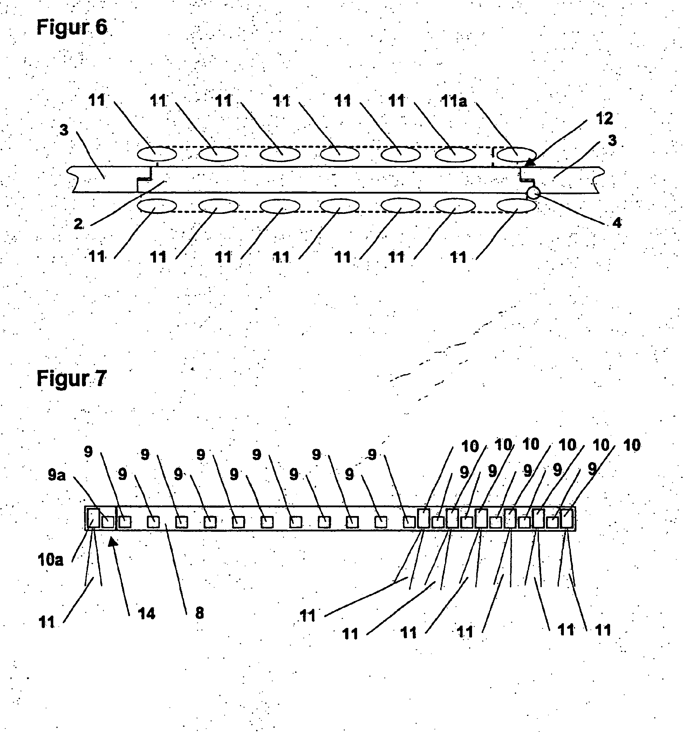

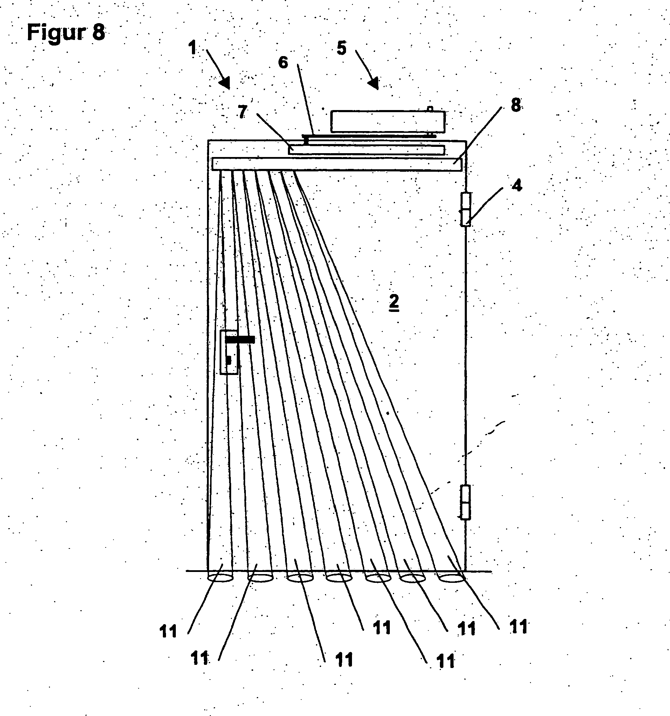

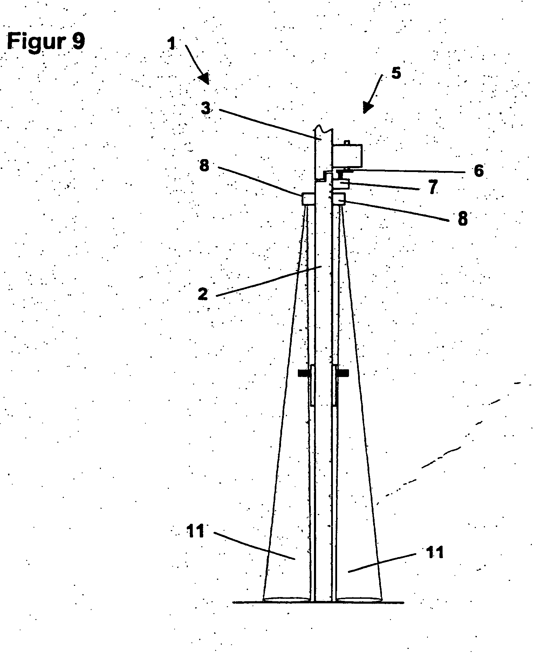

Aus den **Figuren 4** bis **6** ist ersichtlich, dass sich die als sogenannte Aktiv-Infrarot-Sensoren ausgebildeten Sensorleisten 8 jeweils über nahezu die gesamte Breite des Drehtürflügels 2 erstrecken. **Figur 5** zeigt, dass die Sensorleisten 8 jeweils aus mehreren Senderelementen 9 und mehreren Detektorelementen 10 bestehen. Die Senderelemente 9 sind als infrarotlichtemittierende Strahler (z.B. Infrarot-LED) ausgebildet, wobei der kegelförmige Infrarotstrahl zum Boden hin gerichtet ist. In **Figur 6** sind die Flächen des Bodens, die von den Lichtstrahlen 11, 11a bestrahlt werden, erkennbar, und in den **Figuren 8** bis **10** sind die Verläufe der Lichtstrahlen 11, 11 a entlang des Drehtürflügels 2 dargestellt.

Die Detektorelemente 10 generieren ein von der Intensität des empfangenen Infrarotlichts abhängiges Sensorsignal. Je nach Beschaffenheit des Bodens im Bewegungsbereich des Drehtürflügels 2 wird ein Anteil des emittierten Infrarotlichts vom Boden in Richtung der Detektorelemente 10 reflektiert; die Detektorelemente 10 empfangen also bei Nichtvorhandensein eines Hindernisses eine bestimmte Grundintensität an Infrarotstrahlung.

Um den gegebenenfalls störenden Einfluss des vom fremden, nicht im Bewegungsbereich des Drehtürflügels 2 befindlichen Infrarotstrahlungsquellen (z.B. Sonneneinstrahlung) emittierten Infrarotlichts zu eliminieren, wird die von den Senderelementen 9 emittierte Infrarotstrahlung mit einer bestimmten Frequenz getaktet, d.h. ein- und ausgeschaltet. Dies bedeutet, dass die Differenz zwischen der bei eingeschaltetem Senderelement 9 empfangenen Infrarotstrahlung und der bei ausgeschaltetem Senderelement 9 empfangenen Infrarotstrahlung die Fremdeinstrahlung darstellt.

Ein im Bewegungsbereich des Drehtürflügels 2 befindliches, hinreichend großes (z.B. 20cm breites) Objekt gerät vor Berührung. mit dem Drehtürflügel 2 in den Lichtstrahl 11, 11a eines der Senderelemente 9. Das von diesem Senderelement 9 emittierte Infrarotlicht wird nun also von dem im Lichtstrahl 11, 11a befindlichen Objekt reflektiert, wobei ein Teil des reflektierten Infrarotlichts von den Detektorelementen 10 empfangen wird. Da nun gegenüber der Reflexion vom Boden mehr Infrarotlicht zu den Detektorelementen 10 gerät, wird diese Änderung der Infrarotlichtintensität an den Detektorelementen 10 bei Überschreitung eines bestimmten Schwellenwertes der Intensität als im Bewegungsbereich des Drehtürflügels 2 befindliches Hindernis interpretiert. Das daraufhin von der Sensorleiste 8 an die Steuerungseinrichtung übermittelte Signal bewirkt ein Anhalten und gegebenenfalls Reversieren der Antriebseinrichtung durch die Steuerungseinrichtung.

Alle Senderelemente 9 der bandseitigen Sensorleiste 8 befinden sich - abwechselnd mit Detektorelementen 10 - im hauptschließkantennahen Bereich der Sensorleiste 8. Im weiteren Verlauf der bandseitigen Sensorleiste 8 zur vertikalen Nebenschließkante 12 des Drehtürflügels 2 hin sind weitere Detektorelemente 10 angeordnet. Die von den Senderelementen 9 emittierten Lichtstrahlen 11 verlaufen parallel zur Ebene des Drehtürflügels 2 zum Boden hin gerichtet, wobei der der vertikalen Hauptschließkante am nächsten liegende Lichtstrahl 11 senkrecht nach unten gerichtet ist und die Lichtstrahlen 11 der der vertikalen Nebenschließkante 12 näheren Sendereinrichtungen 9 leicht schräg zur vertikalen Nebenschließkante 12 hin gerichtet sind, aber immer noch den Boden treffen. Es ergibt sich eine fächerartige Anordnung der Lichtstrahlen 11, wie in **Figur 8** sichtbar.

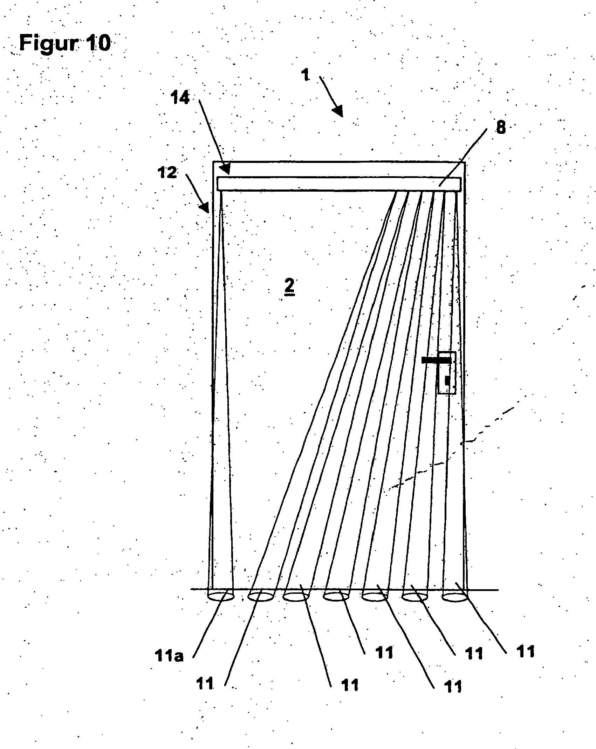

ln ähnlicher Weise sind auch die Senderelemente 9 der bandgegenseitigen, in **Figur 7** dargestellten Sensorleiste 8 im Bereich der vertikalen Hauptschließkante des Drehtürflügels 2 angeordnet, wobei auch im weiteren Verlauf der bandgegenseitigen Sensorleiste 8 zur vertikalen Nebenschließkante 12 des Drehtürflügels 2 hin weitere Detektorelemente 10 angeordnet sind. Zusätzlich befindet sich jedoch bei der bandgegenseitigen Sensorleiste 8 im Bereich der vertikalen Nebenschließkante12 des Drehtürflügels 2 ein Sensor 14 mit einem weiteren Senderelement 9a und einem weiteren Detektorelement 10a. Der von dem nebenschließkantennahen Senderelement 9a senkrecht nach unten emittierte Lichtstrahl 11a verläuft also parallel zu und nahe bei der vertikalen Nebenschließkante 12. Der Verlauf der Lichtstrahlen 11,11a ist aus **Figur 10** ersichtlich.

Ein bei sich schließendem Drehtürflügel 2 in den Bereich der vertikalen Nebenschließkante 12 kommendes Objekt gerät somit in den vom Senderelement 9a des Sensors 14 emittierten Lichtstrahl 11a, bevor es in den sich beim Schließen des Drehtürflügels 2 verengenden Spalt zwischen Drehtürflügel 2 und Türrahmen 3 gelangen kann. Durch die Reflexion des vom Senderelement 9a emittierten Infrarotlichts zum Detektorelement 10a gibt der Sensor 14 ein Signal zur Steuerungseinrichtung ab, woraufhin die Steuerungseinrichtung ein Anhalten oder gegebenenfalls Reversieren der Antriebseinrichtung bewirkt.

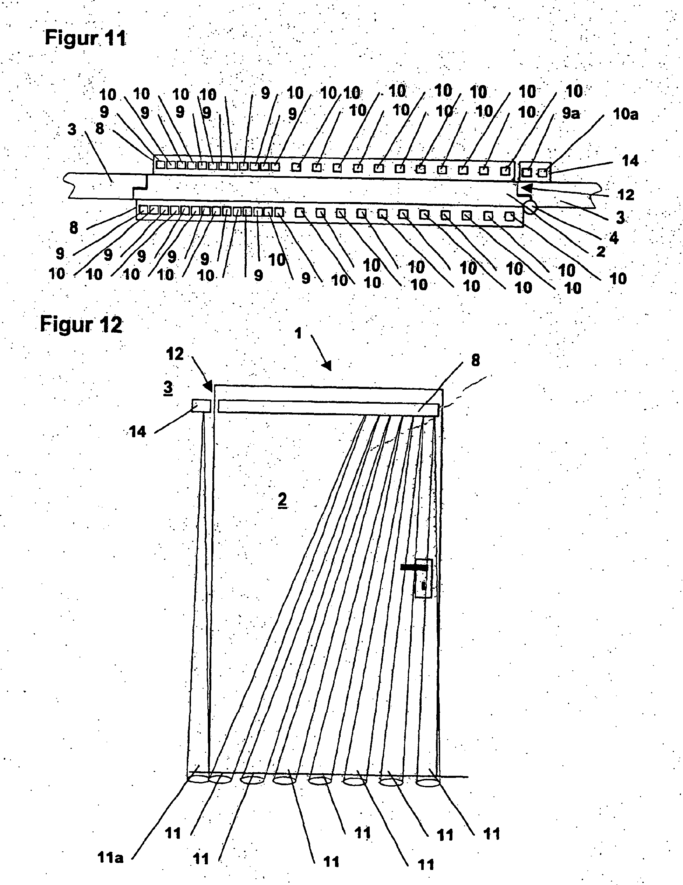

Ein abweichendes Ausführungsbeispiel ist in den **Figuren 11** und **12** dargestellt. Dieses Ausführungsbeispiel findet dann Anwendung, wenn eine flügelfeste Anordnung des nebenschließkantenseitigen Senderelements 9a des Sensors 14 nicht möglich ist und eignet sich auch zur Nachrüstung bestehender Drehtüranlagen, bei denen Nebenschließkante noch nicht abgesichert war. Der Sensor 14 ist ortsfest am Türrahmen 3 im Bereich der vertikalen Nebenschließkante 12 des Drehtürflügels 2 angeordnet und enthält ein Senderelement 9a sowie ein Detektorelement 10a, wobei der Lichtstrahl 11a vom Senderelement 9a senkrecht nach unten emittiert wird, also parallel zu und nahe bei der vertikalen Nebenschließkante 12 verläuft, wie in **Figur 12** gezeigt.

Neben den vorangehend gezeigten Ausführungsbeispielen sind weitere Ausführungen der Sensorvorrichtung denkbar. So kann die Sensorleiste anstelle der gezeigten Vielzahl von Senderelementen auch nur ein Senderelement aufweisen. Der Bereich zwischen dem Senderelement der Sensorleiste und dem Senderelement des nebenschließkantennahen Sensors wird durch eine spezielle Abstrahlcharakteristik des Senderelements der Sensorleiste abgedeckt, z.B. durch eine Vorsatzlinse, welche den emittierten Lichtstrahl des Senderelements zu einem Strahlenfächer umlenkt. Die Detektorelemente können in regelmäßigen oder unregelmäßigen Abständen über die gesamte Breite der Sensorleiste verteilt sein.

Ferner ist es denkbar, die Senderelemente nicht - wie vorangehend gezeigt - konzentriert im hauptschließkantenseitigen Bereich der Sensorleiste anzuordnen, sondern in regelmäßigen oder unregelmäßigen Abständen über die gesamte Breite der Sensorleiste verteilt. Die von den Senderelementen emittierten Lichtstrahlen können dann alle zumindest nahezu senkrecht nach unten angeordnet sein.

Bei den in den Figuren 1 bis 10 gezeigten Ausführungsbeispielen sind Sensorleiste und Sensor jeweils einstückig, d.h. der Sensor in der Sensorleiste integriert ausgebildet. Alternativ ist es denkbar, den Sensor als Zusatzmodul auszubilden, z.B. auch als Nachrüstteil für bestehende Anlägen.

### Liste der Referenzzeichen

- 1: Drehtüranlage
- 2: Drehtürflügel
- 3: Türrahmen
- 4: Band
- 5: Antriebseinrichtung
- 6: Gestänge
- 7: Gleitschiene
- 8: Sensorleiste
- 9: Senderelement
- 9a: Senderelement
- 10: Detektorelement
- 10a: Detektorelement
- 11: Lichtstrahl
- 11a: Lichtstrahl
- 12: Nebenschließkante
- 14: Sensor

## Patentansprüche

1. Automatische Drehtüranlage (1) mit mindestens einem Drehtürflügel (2),
mit einer eine Steuerungseinrichtung aufweisenden Antriebseinrichtung (5) zum motorischen Öffnen und/oder Schließen des Drehtürflügels (2), und
mit einer Sensorvorrichtung mit einem Sensor (14) zur Erkennung von Personen oder Gegenständen im Bewegungsbereich des Drehtürflügels (2), welcher eine Sendereinrichtung zur Aussendung von Lichtstrahlen, eine Detektoreinrichtung zum detektieren von Lichtstrahlen sowie eine Signalübertragungseinrichtung zur Übertragung der Sensorsignale zur Steuerungseinrichtung umfasst,
wobei der Sensor (14) mit mindestens einem Senderelement (9a) und mindestens einem Detektorelement (10a) im Bereich der vertikalen Nebenschließkante (12) des Drehtürflügels (2) angeordnet ist, und
wobei ein Lichtstrahl (11a) des Senderelements (9a) nahe bei und zumindest annähernd parallel zu der vertikalen Nebenschließkante (12) des Drehtürflügels (2) verläuft,
**dadurch gekennzeichnet,**
**dass** eine Sensorleiste (8) mit mindestens einem Senderelement (9) zur Aussendung von Lichtstrahlen und mindestens einem Detektorelement (10) am Drehtürflügel (2) angeordnet ist und so ausgebildet ist, dass bei Vorhandensein einer Person oder eines Gegenstands im Bewegungsbereich des Drehtürflügels ein Signal über die Signalübertragungseinrichtung zur Steuerungseinrichtung geleitet wird und aufgrund dieses Signals der Öffnungs- bzw. Schließvorgang des Drehtürflügels (2) angehalten oder umgekehrt wird,
wobei die Wellenlänge des Lichtstrahls (11a) des Senderelements (9a) des Sensors (14) von der Wellenlänge der Lichtstrahlen (11) des Senderelements bzw. der Senderelemente (9) der Sensorleiste (8) abweicht.

2. Automatische Drehtüranlage nach Anspruch 1,
**dadurch gekennzeichnet, dass** der Sensor (14) am Drehtürflügel (2) angeordnet ist.

3. Automatische Drehtüranlage nach Anspruch 1,
**dadurch gekennzeichnet, dass** der Sensor (14) zusätzlich zur Sensorleiste (8) am Drehtürflügel (2) angeordnet ist.

4. Automatische Drehtüranlage nach Anspruch 3,
**dadurch gekennzeichnet, dass** der Sensor (14) in der Sensorleiste (8) integriert angeordnet ist.

5. Automatische Drehtüranlage nach Anspruch 3,
**dadurch gekennzeichnet, dass** der Sensor (14) separat von der Sensorleiste (8) ausgebildet ist.

6. Automatische Drehtüranlage nach Anspruch 5,
**dadurch gekennzeichnet, dass** der Sensor (14) und die Sensorleiste (8) modular ausgebildet sind, wobei die Sensorleiste (8) eine Anschlusseinrichtung zum Anschluss des Sensors (14) aufweist.

7. Automatische Drehtüranlage nach Anspruch 5,
**dadurch gekennzeichnet, dass** der Sensor (14) und die Sensorleiste (8) unter einer gemeinsamen Abdeckblende angeordnet sind.

8. Automatische Drehtüranlage nach Anspruch 1,
**dadurch gekennzeichnet, dass** der Sensor (14) ortsfest angeordnet ist.

9. Automatische Drehtüranlage nach Anspruch 1,
**dadurch gekennzeichnet, dass** eine Speichereinrichtung vorgesehen ist zur Speicherung der von der Detektoreinrichtung (10, 10a) empfangenen Lichtintensität.

10. Automatische Drehtüranlage nach Anspruch 9,
**dadurch gekennzeichnet, dass** die Speichereinrichtung so ausgebildet ist, das die Speicherung der von der Detektoreinrichtung (10, 10a) empfangenen Lichtintensität öffnungswinkelabhängig erfolgt.

11. Automatische Drehtüranlage nach Anspruch 9,
**dadurch gekennzeichnet, dass** eine Vergleichereinrichtung vorhanden ist zum Vergleich der in der Speichereinrichtung gespeicherten Lichtintensitäten mit den aktuell von der Detektoreinrichtung (10, 10a) gemessenen Lichtintensität.

12. Automatische Drehtüranlage nach Anspruch 11,
**dadurch gekennzeichnet, dass** die Steuerungseinrichtung so ausgebildet ist, dass ein Anhalten oder Reversieren der Bewegung des Drehtürflügels (2) nur dann erfolgt, wenn die aktuell gemessene Lichtintensität an der Detektoreinrichtung (10, 10a) die für den jeweiligen Öffnungswinkel gespeicherte Lichtintensität um einen bestimmten Wert überschreitet.

13. Automatische Drehtüranlage nach Anspruch 11,
**dadurch gekennzeichnet, dass** die Steuerungseinrichtung so ausgebildet ist, dass als Störung der Sensorvorrichtung gewertet wird, wenn die aktuell gemessene Lichtintensität an der Detektoreinrichtung (10, 10a) die für den jeweiligen Öffnungswinkel gespeicherte Lichtintensität um einen bestimmten Wert unterschreitet.

14. Automatische Drehtüranlage nach Anspruch 1,
**dadurch gekennzeichnet, dass** die Signalübertragungseinrichtung zur bidirektionalen Signalübertragung zwischen dem Sensor (14) und der Steuerungseinrichtung ausgebildet ist.

## Claims

1. Automatic swing door system (1) having at least one swing door leaf (2), having a drive device (5), which has a control device, for opening and/or closing the swing door leaf (2) by motor, and having a sensor apparatus with a sensor (14) for identifying people or objects in the movement region of the swing door leaf (2), which sensor comprises a transmitter device for emitting light beams, a detector device for detecting light beams and also a signal transmission device for transmitting sensor signals to the control device,
with the sensor (14) with at least one transmitter element (9a) and at least one detector element (10a) being arranged in the region of the vertical secondary closing edge (12) of the swing door leaf (2), and
with a light beam (11a) from the transmitter element (9a) running close to and at least approximately parallel to the vertical secondary closing edge (12) of the swing door leaf (2),
**characterized**
**in that** a sensor strip (8) with at least one transmitter element (9) for emitting light beams and at least one detector element (10) is arranged on the swing door leaf (2) and is formed such that, when a person or an object is present in the movement region of the swing door leaf, a signal is passed to the control device via the signal transmission device and the opening or closing process of the swing door leaf (2) is stopped or reversed on the basis of this signal, with the wavelength of the light beam (11a) from the transmitter element (9a) of the sensor (14) differing from the wavelength of the light beams (11) from the transmitter element or the transmitter elements (9) of the sensor strip (8).

2. Automatic swing door system according to Claim 1, **characterized in that** the sensor (14) is arranged on the swing door leaf (2).

3. Automatic swing door system according to Claim 1, **characterized in that**, in addition to the sensor strip (8), the sensor (14) is arranged on the swing door leaf (2).

4. Automatic swing door system according to Claim 3, **characterized in that** the sensor (14) is arranged so as to be integrated in the sensor strip (8).

5. Automatic swing door system according to Claim 3, **characterized in that** the sensor (14) is formed separately from the sensor strip (8).

6. Automatic swing door system according to Claim 5, **characterized in that** the sensor (14) and the sensor strip (8) are formed in a modular manner, with the sensor strip (8) having a connection device for connection of the sensor (14).

7. Automatic swing door system according to Claim 5, **characterized in that** the sensor (14) and the sensor strip (8) are arranged beneath a common cover panel.

8. Automatic swing door system according to Claim 1, **characterized in that** the sensor (14) is arranged in a stationary manner.

9. Automatic swing door system according to Claim 1, **characterized in that** a memory device is provided for storing the light intensity received by the detector device (10, 10a).

10. Automatic swing door system according to Claim 9, **characterized in that** the memory device is formed such that the light intensity received by the detector device (10, 10a) is stored as a function of the opening angle.

11. Automatic swing door system according to Claim 9, **characterized in that** there is a comparator device for comparing the light intensities stored in the memory device with the light intensity currently measured by the detector device (10, 10a).

12. Automatic swing door system according to Claim 11, **characterized in that** the control device is formed such that the movement of the swing door leaf (2) is stopped or reversed only if the currently measured light intensity at the detector device (10, 10a) exceeds the light intensity stored for the respective opening angle by a specific value.

13. Automatic swing door system according to Claim 11, **characterized in that** the control device is formed such that the situation of the currently measured light intensity at the detector device (10, 10a) falling below the light intensity stored for the respective opening angle by a specific value is judged to be a fault in the sensor apparatus.

14. Automatic swing door system according to Claim 1, **characterized in that** the signal transmission device is designed for bidirectional signal transmission between the sensor (14) and the control device.

## Revendications

1. Installation de porte pivotante automatique (1) comportant au moins un battant de porte pivotante (2), comportant un dispositif d'entraînement (5) présentant un dispositif de commande en vue de l'ouverture et/ou la fermeture motorisée du battant de porte pivotante (2), et comportant un dispositif de capteur avec un capteur (14) pour reconnaître des personnes ou des objets dans la zone de mouvement du battant de porte pivotante (2), qui comprend un dispositif émetteur pour émettre des rayons de lumière, un dispositif détecteur pour détecter des rayons de lumière ainsi qu'un dispositif de transmission de signaux pour transmettre les signaux de capteur au dispositif de commande,
dans laquelle le capteur (14) est disposé avec au moins un élément émetteur (9a) et au moins un élément détecteur (10a) au niveau du bord secondaire de fermeture (12) vertical du battant de porte pivotante (2), et
dans laquelle un rayon de lumière (11a) de l'élément émetteur (9a) s'étend à proximité de et au moins approximativement parallèlement au bord secondaire de fermeture (12) vertical du battant de porte pivotante (2),
**caractérisée en ce que**
une barre de capteur (8) comportant au moins un élément émetteur (9) pour émettre des rayons de lumière et au moins un élément détecteur (10) est disposée sur le battant de porte pivotante (2) et est configurée de telle sorte qu'en présence d'une personne ou d'un objet dans la zone de mouvement du battant de porte pivotante un signal soit guidé par l'intermédiaire du dispositif de transmission de signaux vers le dispositif de commande et sur la base de ce signal le processus d'ouverture, resp. de fermeture du battant de porte pivotante (2) est arrêté ou inversé,
dans laquelle la longueur d'onde du rayon de lumière (11a) de l'élément émetteur (9a) du capteur (14) s'écarte de la longueur d'onde des rayons de lumière (11) de l'élément émetteur, resp. des éléments émetteurs (9) de la barre de capteur (8).

2. Installation de porte pivotante automatique selon la revendication 1,
**caractérisée en ce que** le capteur (14) est disposé sur le battant de porte pivotante (2).

3. Installation de porte pivotante automatique selon la revendication 1,
**caractérisée en ce que** le capteur (14) est disposé en plus de la barre de capteur (8) sur le battant de porte pivotante (2).

4. Installation de porte pivotante automatique selon la revendication 3,
**caractérisée en ce que** le capteur (14) est intégré dans la barre de capteur (8).

5. Installation de porte pivotante automatique selon la revendication 3,
**caractérisée en ce que** le capteur (14) est réalisé séparément de la barre de capteur (8).

6. Installation de porte pivotante automatique selon la revendication 5,
**caractérisée en ce que** le capteur (14) et la barre de capteur (8) sont réalisés de manière modulaire, dans laquelle la barre de capteur (8) présente un dispositif de connexion en vue de la connexion du capteur (14).

7. Installation de porte pivotante automatique selon la revendication 5,
**caractérisée en ce que** le capteur (14) et la barre de capteur (8) sont disposés sous un cache commun.

8. Installation de porte pivotante automatique selon la revendication 1,
**caractérisée en ce que** le capteur (14) est disposé de manière stationnaire.

9. Installation de porte pivotante automatique selon la revendication 1,
**caractérisée en ce qu'**un dispositif de mémorisation est prévu en vue de la mémorisation de l'intensité lumineuse reçue par le dispositif détecteur (10, 10a).

10. Installation de porte pivotante automatique selon la revendication 9,
**caractérisée en ce que** le dispositif de mémorisation est configuré de telle sorte que la mémorisation de l'intensité lumineuse reçue par le dispositif détecteur (10, 10a) s'effectue en fonction de l'angle d'ouverture.

11. Installation de porte pivotante automatique selon la revendication 9,
**caractérisée en ce qu'**un dispositif comparateur est présent en vue de la comparaison des intensités lumineuses mémorisées dans le dispositif de mémorisation avec l'intensité lumineuse actuellement mesurée par le dispositif détecteur (10, 10a).

12. Installation de porte pivotante automatique selon la revendication 11,
**caractérisée en ce que** le dispositif de commande est configuré de telle sorte qu'un arrêt ou une inversion du mouvement du battant de porte pivotante (2) s'effectue seulement lorsque l'intensité lumineuse actuellement mesurée sur le dispositif détecteur (10, 10a) dépasse d'une valeur déterminée l'intensité lumineuse mémorisée pour l'angle d'ouverture respectif.

13. Installation de porte pivotante automatique selon la revendication 11,
**caractérisée en ce que** le dispositif de commande est configuré de telle sorte que comme perturbation du dispositif de capteur il est estimé quand l'intensité lumineuse actuellement mesurée sur le dispositif détecteur (10, 10a) reste inférieure d'une valeur déterminée à l'intensité lumineuse mémorisée pour l'angle d'ouverture respectif.

14. Installation de porte pivotante automatique selon la revendication 1,
**caractérisée en ce que** le dispositif de transmission de signaux est configuré en vue de la transmission de signaux bidirectionnelle entre le capteur (14) et le dispositif de commande.
